# EUROPEAN PATENT APPLICATION

(11) **EP 2 042 977 A1**
(43) Date of publication of application: **01.04.2009**
(21) Application number: 08017002.0
(22) Date of filing: 26.09.2008
(51) Int. Cl.: G06F 3/048

(54) **Method for viewing image**

(30) Priority: 29.09.2007 TW 96136570
(71) Applicant: HTC Corporation, Taoyuan County 330 (TW)
(72) Inventor: Chen, I-Fei, Taoyuan City Taoyuan County 330 (TW); Shih, I-Fen, Taoyuan City Taoyuan County 330 (TW); Liu, Jian-Chyn, Taoyuan City Taoyuan County 330 (TW); Tai, Kuo-Hsi, Taoyuan City Taoyuan County 330 (TW); Chien, Wen-Shu, Taoyuan City Taoyuan County 330 (TW); Li, I-Fang, Taoyuan City Taoyuan County 330 (TW); Hsieh, Wei-Ting, Taoyuan City Taoyuan County 330 (TW); Yang, Yi-Fan, Taoyuan City Taoyuan County 330 (TW)
(74) Representative: Becker Kurig Straus

(57) **Abstract**

A method for viewing an image is provided. The method is suitable for viewing an image displayed on a display by using an input device to directly touch the display. The method includes steps of receiving a static motion made by the input device on the display, determining a motion-temporal-still time of the static motion, and then initializing an image panning mode, when the motion-temporal-still time is at least a first predetermined time.

## Description

### BACKGROUND OF THE INVENTION

### 1. Field of the Invention

The present invention relates to a method for operating an image, and in particular, to a method for viewing an image.

### 2. Description of Related Art

In early days, cameras adopting soft films are used for taking pictures and recording static pictures, however, the images cannot be viewed immediately after being shot, and furthermore, additional time and money must be spent on developing the films into photos. Therefore, in the coming digital era, the cameras in early days have been gradually replaced by digital cameras, which are capable of viewing images in real time, and even directly transmitting the images to the connected printing machine, so as to develop into photos.

Besides the feature of viewing the digital images on the camera in real time, an additional feature of the image digitization lies in that, the digital image can be quickly transmitted and shared via network or wireless transmission, so as to be viewed on other devices equipped with displays. Currently, there are various portable devices equipped with the display for viewing images, such as a mobile phone or a personal digital assistant (PDA). However, when a user needs to move the image on the mobile phone or PDA, or even to perform an image-processing operation, for example, executing an instruction of zoom-in the image through a gesture motion on the display, a plurality of input actions such as pressing several keys or buttons must be performed, so as to accomplish the image movement or gesture motion on the display. The above operation manner is rather complicated and has a low operation speed. In terms of the device design, the above operation manner cannot simplify the functions of the keys, or reduce the number of keys, thereby failing to reduce the size of the device.

### SUMMARY OF THE INVENTION

The present invention is directed to a method for viewing an image, which enables a user to easily view an image on a display through a single input directly performed on the display of an electronic device.

The present invention is also directed to a system for viewing an image, which is suitable for simplifying operation procedures for viewing an image, and improving the convenience of using the electronic device.

As embodied and broadly described herein, a method for viewing an image is provided in the present invention, which is suitable for viewing an image displayed on a display by using an input device to directly touch the display. The method includes steps of receiving a static motion of the input device made on the display, determining a motion-temporal-still time of the static motion, and then initializing an image panning mode, when the motion-temporal-still time is at least a first predetermined time.

According to an embodiment of the present invention, in the method for viewing an image, when the motion-temporal-still time is smaller than the first predetermined time, a gesture mode is initialized. The gesture mode includes an image zoom-in operation, an image zoom-out operation, and an image rotate operation.

According to an embodiment of the present invention, after initializing the image panning mode, the method for viewing an image further includes the following steps. During an interrupt motion generated when the input device leaves the display, an interrupt time of the interrupt motion is determined. After that, when the interrupt time is greater than a second predetermined time, the image panning mode is terminated. The second predetermined time is approximately 250 µs.

According to an embodiment of the present invention, after initializing the image panning mode, the method for viewing an image further includes moving the image. After moving the image, the method further includes the following steps. During an interrupt motion generated when the input device leaves the display, an interrupt time of the interrupt motion is determined. After that, when the interrupt time is greater than a third predetermined time, the image panning mode is terminated, and the gesture mode is recovered. In addition, the third predetermined time is approximately 250 µs.

In the method for viewing an image according to an embodiment of the present invention, the first predetermined time is approximately 250 µs.

In the method for viewing an image according to an embodiment of the present invention, the display displays a part of the image.

In the method for viewing an image according to an embodiment of the present invention, the input device includes a finger or a stylus.

A system for viewing an image is also provided in the present invention, which is applicable for viewing an image displayed on a display by using an input device to directly touch the display. The system includes a motion receiving module, a motion-temporal-still time determining module, and an image moving module. The motion receiving module is used to receive a static motion of the input device made on the display. The motion-temporal-still time determining module is used to determine a motion-temporal-still time of the static motion. The image moving module is used to initialize an image panning mode when the motion-temporal-still time is at least a first predetermined time.

According to an embodiment of the present invention, the system for viewing an image further includes a gesture module. When the motion-temporal-still time is smaller than the first predetermined time, the gesture module initializes a gesture mode. Moreover, the gesture mode includes an image-processing operation performed on the image by the input device through a gesture input motion on the display. The image-processing operation includes an image zoom-in operation, an image zoom-out operation, and an image rotate operation.

In the system for viewing an image according to an embodiment of the present invention, the image moving module moves the image after the image panning mode is initialized.

In the system for viewing an image according to an embodiment of the present invention, the image moving module further includes an interrupt time determining unit and a panning termination unit. The interrupt time determining unit is used to determine an interrupt time of an interrupt motion during the interrupt motion generated when the input device leaves the display. The panning termination unit is used to terminate the image panning mode when the interrupt time is greater than a second predetermined time. The second predetermined time is approximately 250 µs.

In the system for viewing an image according to an embodiment of the present invention, the first predetermined time is approximately 250 µs.

In the system for viewing an image according to an embodiment of the present invention, the display displays a part of the image.

In the system for viewing an image according to an embodiment of the present invention, the input device includes a finger or a stylus.

In the present invention, the input device is used to directly input successive motions on the display of the electronic device, and to switch between manipulation modes (such as the gesture mode or the image panning mode) by determining the static motion and the interrupt motion in the successive motions, so as to view the image on the display or to perform the image-processing operation for the image on the display, thereby simplifying the operating and inputting procedures for viewing an image, and improving the convenience of using the electronic device.

In order to make the aforementioned and other objectives, features and advantages of the present invention comprehensible, embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic flow chart of a method for viewing an image according to an embodiment of the present invention.

FIGs. 2A-2B are schematic views of actual operations when viewing an image according to an embodiment of the present invention.

FIG. 3 is a schematic view of a system for viewing an image according to an embodiment of the present invention.

### DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

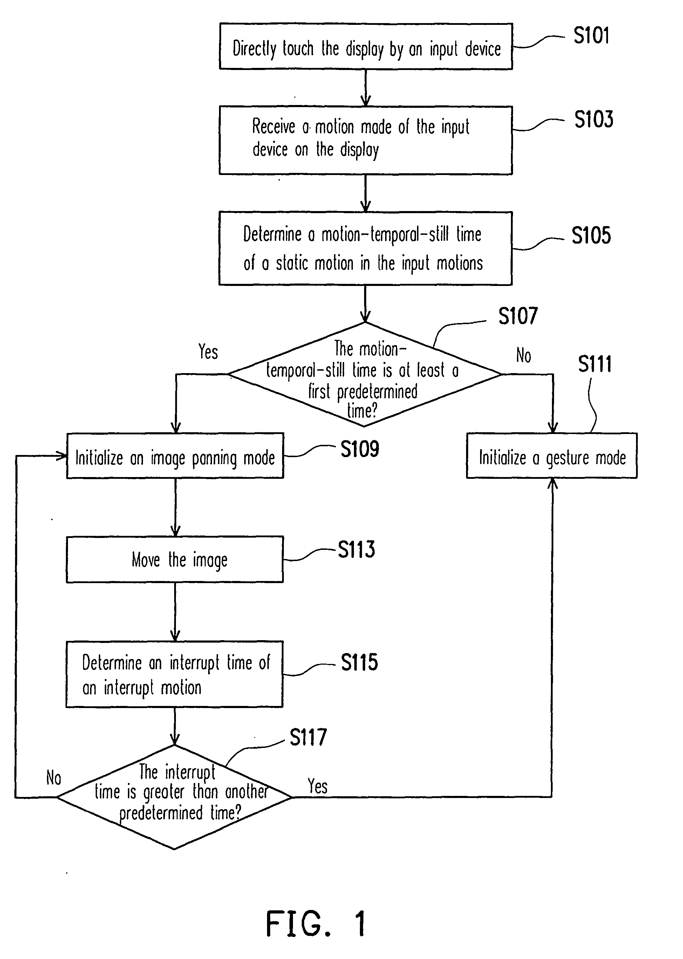

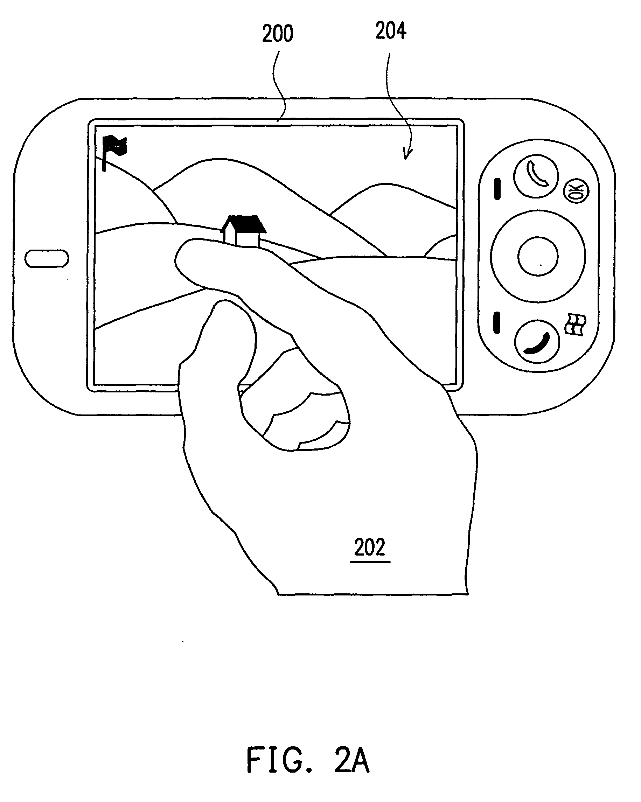

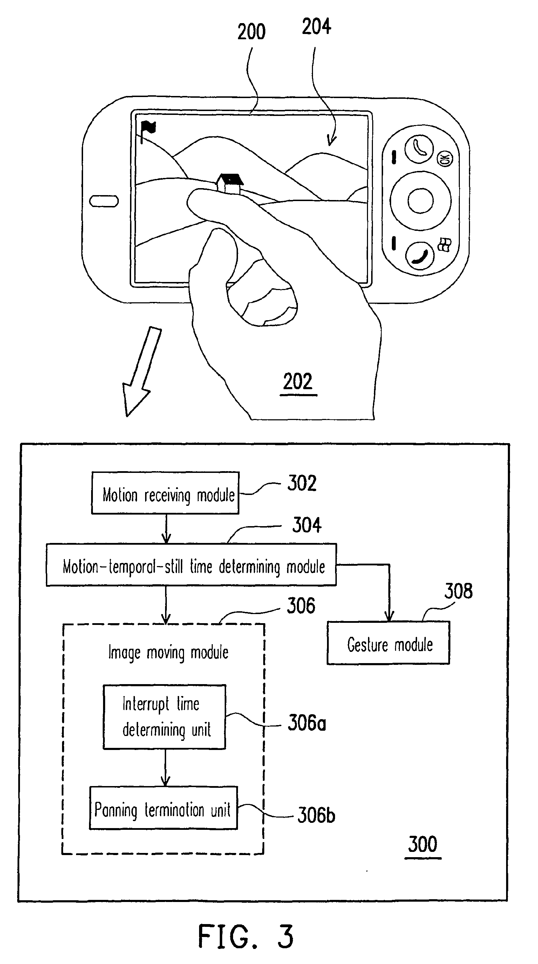

FIG. 1 is a schematic flow chart of a method for viewing an image according to an embodiment of the present invention. FIGs. 2A-2B are schematic views of actual operations when viewing an image according to an embodiment of the present invention. FIG. 3 is a schematic view of a system for viewing an image according to an embodiment of the present invention. Referring to FIG. 3, a system 300 for viewing an image of the present invention at least includes a motion receiving module 302, a motion-temporal-still time determining module 304, an image moving module 306, and a gesture module 308. The image moving module 306 at least includes an interrupt time determining unit 306a and a panning termination unit 306b. Referring to FIGs. 1, 2A, and 3, an image 204 on a display 200 is viewed by using an input device 202 to directly touch the display 200 (Step S101). The display 200 is, for example, a touch screen, and the input device 202 is, for example, a finger shown in FIG. 2A or a stylus, or other devices for performing input actions on the touch screen.

After that, in Step S103, the motion receiving module 302 in the system 300 for viewing an image receives the successive motions input to the display 200 by the input device 202. The successive motions at least include a static motion. Then, in Step S105, the motion-temporal-still time determining module 304 of the system 300 for viewing an image determines a motion-temporal-still time of the static motion.

In Step S107, when the motion-temporal-still time is at least a first predetermined time, the image moving module 306 initializes an image panning mode (Step S109). However, when the motion-temporal-still time is smaller than the first predetermined time, the gesture module 308 initializes a gesture mode (Step S111). The first predetermined time is approximately 250 µs. The gesture mode includes an image zoom-in operation, an image zoom-out operation, and an image rotate operation.

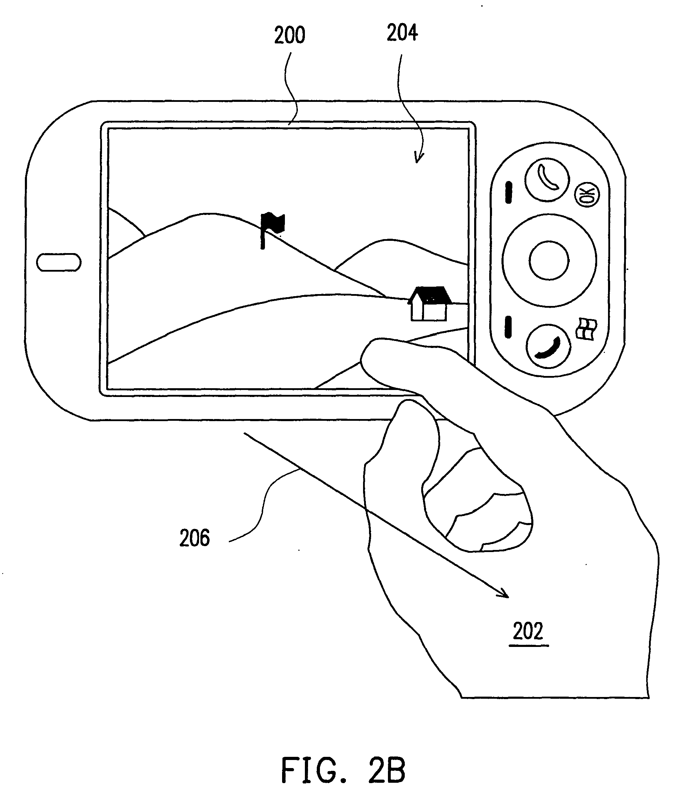

In addition, after initializing the image panning mode in Step S 109, the image 204 displayed on the display 200 is moved according to a series of panning motions after the static motion in the successive motions directly input onto the display 200 by the input device 202 (Step S 113). As shown in FIG. 2B, when the image moving module 306 of the system 300 for viewing an image initializes the image panning mode, the image moving module 306 moves the image 204 on the display 200 according to a series of panning motions 206 input by the input device 202. In an embodiment, the display 200 merely displays a part of the image 204, i.e., the image 204 is partially zoomed in, so that merely a part of the image is displayed.

In addition, after the image moving module 306 initializes the image panning mode, or even while the image moving module 306 is moving the image 204 on the display 200, the input device 202 leaves the display 200 to generate an interrupt motion, and the interrupt time determining unit 306a in the image moving module 306 determines an interrupt time of the interrupt motion (Step S 115). When the interrupt time is greater than a second predetermined time (Step S 117), the panning termination unit 306b in the image moving module 306 terminates the image panning mode. In an embodiment, while terminating the image panning mode, the system 300 for viewing an image recovers/switches to the gesture mode from the image panning mode (Step S111). On the other aspect, when the interrupt time is smaller than the second predetermined time, the image panning mode is maintained, and the image moving module 306 moves the image 204 according to the series of panning motions input by the input device 202 on the display 200. The second predetermined time is approximately 250 µs.

Based on the above, in the present invention, the input device is used to directly input successive motions on the display of the electronic device, and switches between manipulation modes (such as the gesture mode or the image panning mode) by determining the static motion and the interrupt motion in the successive motions, so as to view the image on the display or to perform the image-processing operation for the image on the display. When the user views or processes the image on the display, after inputting successive motions on the display, the user does not need to further press other buttons or perform other input actions on the display, thereby simplifying the operating and inputting procedures for viewing an image, and improving the convenience of using the electronic device.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method for viewing an image, applicable for viewing an image displayed on a display by using an input device to directly touch the display, comprising:
receiving a static motion made by the input device on the display;
determining a motion-temporal-still time of the static motion; and
initializing an image panning mode, when the motion-temporal-still time is at least a first predetermined time.

2. The method for viewing an image according to claim 1, further comprising: initializing a gesture mode, when the motion-temporal-still time is smaller than the first predetermined time.

3. The method for viewing an image according to claim 2, wherein the gesture mode comprises an image zoom-in operation, an image zoom-out operation, and an image rotate operation.

4. The method for viewing an image according to claim 1, wherein after initializing the image panning mode, the method further comprises:
during an interrupt motion generated when the input device leaves the display, determining an interrupt time of the interrupt motion; and
terminating the image panning mode, when the interrupt time is greater than a second predetermined time.

5. The method for viewing an image according to claim 1, further comprising: moving the image, after initializing the image panning mode.

6. The method for viewing an image according to claim 5, wherein after moving the image, the method further comprises:
during an interrupt motion generated when the input device leaves the display, determining an interrupt time of the interrupt motion; and
terminating the image panning mode, and recovering a gesture mode, when the interrupt time is greater than a third predetermined time.

7. A system for viewing an image, applicable for viewing an image displayed on a display by using an input device to directly touch the display, comprising:
a motion receiving module, for receiving a static motion made by the input device on the display;
a motion-temporal-still time determining module, for determining a motion-temporal-still time of the static motion; and
an image moving module, for initializing an image panning mode, when the motion-temporal-still time is at least a first predetermined time.

8. The system for viewing an image according to claim 7, further comprising: a gesture module, for initializing a gesture mode, when the motion-temporal-still time is smaller than the first predetermined time.

9. The system for viewing an image according to claim 8, wherein the gesture mode comprises:
an image-processing operation performed on the image by the input device through a gesture input motion on the display.

10. The system for viewing an image according to claim 8, wherein the image-processing operation comprises an image zoom-in operation, an image zoom-out operation, and an image rotate operation.

11. The system for viewing an image according to claim 7, wherein the image moving module moves the image after the image panning mode is initialized.

12. The system for viewing an image according to claim 7, wherein the image moving module further comprises:
an interrupt time determining unit, for determining an interrupt time of an interrupt motion during the interrupt motion generated when the input device leaves the display; and
a panning termination unit, for terminating the image panning mode, when the interrupt time is greater than a second predetermined time.

13. A method for viewing an image, applicable for viewing an image displayed on a display by using an input device to directly touch the display, comprising:
receiving a static motion made by the input device on the display;
determining a motion-temporal-still time of the static motion; and
initializing an a gesture mode, when the motion-temporal-still time is smaller a first predetermined time.

14. The method for viewing an image according to claim 13, further comprising: initializing an image panning mode, when the motion-temporal-still time is at least the first predetermined time.

15. The method for viewing an image according to claim 14, wherein after initializing the image panning mode, the method further comprises:
during an interrupt motion generated when the input device leaves the display, determining an interrupt time of the interrupt motion; and
terminating the image panning mode, when the interrupt time is greater than a second predetermined time.
